# EUROPÄISCHE PATENTSCHRIFT

(11) **EP 2 115 281 B1**
(45) Veröffentlichungstag und Bekanntmachung des Hinweises auf die Patenterteilung: **24.03.2010**
(21) Anmeldenummer: 08701106.0
(22) Anmeldetag: 15.01.2008
(51) Int. Cl.: F01N 13/10, F01N 13/18, F16L 23/032

(54) **KLEMMFLANSCHANORDNUNG ZUM ANSCHLUSS EINER AUSPUFFANLAGE AN EINE BRENNKRAFTMASCHINE**
CLAMPING FLANGE ARRANGEMENT FOR CONNECTING AN EXHAUST SYSTEM TO AN INTERNAL COMBUSTION ENGINE
AGENCEMENT DE BRIDE DE SERRAGE POUR LE RACCORDEMENT D'UN SYSTÈME D'ÉCHAPPEMENT À UN MOTEUR À COMBUSTION INTERNE

(30) Priorität: 19.01.2007 DE 102007002825
(43) Veröffentlichungstag der Anmeldung: 11.11.2009
(73) Patentinhaber: AUDI AG, 85045 Ingolstadt (DE)
(72) Erfinder: STEMMER, Xaver, 85084 Reichertshofen (DE)
(86) Internationale Anmeldenummer: PCT/EP2008/000246
(87) Internationale Veröffentlichungsnummer: WO 2008/087001

(56) Entgegenhaltungen:
- DE-A1- 4 205 454
- DE-A1- 4 338 719

## Beschreibung

Die Erfindung betrifft eine Klemmflanschanordnung zum Anschluss einer Auspuffanlage an eine Brennkraftmaschine nach Oberbegriff des Anspruchs 1.

Klemmflanschanordnungen zum Anschluss von Auspuffanlagen an Brennkraftmaschinen sind bekannt. Sie dienen dazu, eine Verbindung von Auspuffrohren, insbesondere von Auspuffkrümmern, mit Gasauslasskanälen der Brennkraftmaschine bereitzustellen, wobei diese Krümmer eine hohe thermische Belastung durch die heißen Abgase der Brennkraftmaschine erfahren. Die durch thermische Belastung erfolgende Dimensionsänderung des Krümmers und/oder eines Auslassbereiches der Brennkraftmaschine muss von der Klemmflanschanordnung in einer solchen Art und Weise aufgenommen werden, dass die Verbindung dicht bleibt. Gleichzeitig ist eine einfache Montage und/oder Demontage gewünscht. Hierzu ist beispielsweise aus der DE 42 05 454 A1 eine Einrichtung zum Anschließen eines Rohrkrümmers an einen Zylinderkopf bekannt, bei der der Rohrkrümmer mittels eines Klemmflansches im Bereich des Auslasskanals der Brennkraftmaschine angeordnet ist und über eine quer zur Dichtfläche eine Oberseite des Krümmers kraftbeaufschlagende Schraube gehalten wird, die sich mit ihrem Gewinde in einem einstückig zum Motorblock ausgebildeten Innengewinde abstützt. Bei dieser und anderen bekannten Anordnungen ist nachteilig, dass die durch die Wärmedehnung insbesondere des Krümmers relativ zum Motorblock der Brennkraftmaschine erfolgende Längenänderung zu einer Querkraft im Bereich der den Krümmer haltenden Schraube und/oder zu Verformungen des Krümmers und/oder eines freien Bereichs der Schraube führt. Weiter ist nachteilig, dass diese Anordnung zur Verzunderung neigt, da einerseits die im Regelfall verwendeten Materialien, nämlich Aluminium für den Motorblock der Brennkraftmaschine und Stahl für die den Krümmer haltende Schraube, in dieser Kombination zur Korrosion neigen und durch die starke thermische Einwirkung eine Verzunderung erfolgt, so dass die den Krümmer klemmende Schraube nach langen Betriebsjahren der Brennkraftmaschine nur noch sehr schwer gelöst werden kann.

Aufgabe der Erfindung ist es, eine Klemmflanschanordnung zum Anschluss einer Auspuffanlage an eine Brennkraftmaschine bereitzustellen, die die genannten Nachteile vermeidet.

Hierzu wird eine Klemmflanschanordnung zum Anschluss einer Auspuffanlage an eine Brennkraftmaschine vorgeschlagen, mit mindestens einer an der Brennkraftmaschine ausgebildeten Hinterschneidung, in der ein .Flanschbereich eines Klemmflansches eingesetzt angeordnet ist und mit mindestens einem Schraubbolzen, der in ein der Brennkraftmaschine zugeordnetes Gewinde eingeschraubt ist und mit einem Ende den Klemmflansch oder ein am Klemmflansch befestigtes Rohr, insbesondere Krümmerrohr, der Auspuffanlage klemmend beaufschlagt. Hierbei ist vorgesehen, dass das Gewinde in einem Lagerelement ausgebildet ist, das sich an einem Gegenlager der Brennkraftmaschine verlagerbar abstützt. Der Schraubbolzen, der, ähnlich den im Stand der Technik bekannten Ausführungen, das Krümmerrohr klemmend beaufschlagt, ist demnach in einem Gewinde geführt, das in einem Lagerelement ausgebildet und hierbei um Querkräfte und Verformungen durch die thermisch bedingte Dimensionsänderung insbesondere des Krümmerrohrs, aber auch der Brennkraftmaschine, insbesondere des Motorblocks, aufzufangen, verlagerbar angeordnet ist. Das Gewinde, in dem der Schraubbolzen geführt ist, ist daher nicht fest, insbesondere nicht einstückig mit dem Zylinderkopf der Brennkraftmaschine ausgebildet, sondern kann sich relativ zu diesem oder zur Brennkraftmaschine als solcher verlagern.

In einer bevorzugten Ausführungsform ist vorgesehen, dass das Lagerelement ein Schwenklagerelement ist. Ein Schwenklagerelement ist ein solches Lagerelement, das sich um eine Schwenkachse verschwenken lässt.

In einer anderen Ausführungsform ist vorgesehen, dass das Lagerelement ein Schiebelagerelement ist. Ein Schiebelagerelement lässt sich in einer quer zur Längserstreckung des Schraubbolzens verlaufenden Schiebeebene verschieben, insbesondere gleitend verschieben.

Es ist weiter vorgesehen, dass der Klemmflansch in einer Dichtebene an der Brennkraftmaschine anliegt. Zwischen dem Klemmflansch und der Brennkraftmaschine ist folglich eine Ebene ausgebildet, in der sich Klemmflansch und Brennkraftmaschine in Berührlage befinden, und in der die Abdichtung erfolgt.

In einer weiteren bevorzugten Ausführungsform ist vorgesehen, dass das Lagerelement um eine Schwenkachse verschwenkbar ist, die quer zu einer Schraubbolzenlängsachse des Schraubbolzens verläuft sowie die Schraubbolzenlängsachse kreuzt und in einer Klemmebene liegt, in der die Schraubbolzenlängsachse liegt, wobei die Klemmebene zu der Dichtebene einen Winkel von 90° einschließt. Das Lagerelement weist demzufolge eine Schwenkachse auf, um die es verschwenkbar ist. Diese liegt quer zur Schraubbolzenlängsachse des Schraubbolzens und kreuzt hierbei die Schraubbolzenlängsachse. Die Schwenkachse liegt weiter in einer Klemmebene, in der auch die Schraubenbolzenachse liegt, wobei die Klemmebene zu der Dichtebene einen Winkel von 90° einschließt.

In einer weiteren bevorzugten Ausführungsform ist vorgesehen, dass die Klemmebene durch oder im Wesentlichen durch ein Zentrum des an die Brennkraftmaschine mittels des Klemmflansches angeschlossenen Rohres, insbesondere Krümmerrohrs, der Auspuffanlage verläuft. Hiermit ist gemeint, dass die Klemmebene als die Ebene, in der die von dem Schraubbolzen aufgebrachte Klemmkraft an das Rohr, insbesondere das Krümmerrohr, angreift, durch das Zentrum eben dieses Rohres, betrachtet in der Nähe der Brennkraftmaschine, verläuft. Hiermit ist auch gemeint, dass, insbesondere durch Wärmeausdehnung und thermische Dimensionsänderung bedingt, es nicht erforderlich ist, dass die Klemmebene genau durch das Zentrum des angeschlossenen Rohres verläuft. Bewegt sich beispielsweise das Rohr durch Wärmeausdehnung im Betrieb mit heißen Gasen um eine kleine Strecke in die eine oder andere Richtung, was insbesondere bei am Motorblock außenliegenden (also ersten oder letzten) Rohren gut zu beobachten ist, ergibt sich hierdurch ein Verlauf der Klemmebene, der nicht genau durch das Zentrum des Rohres geht, sondern um eben diese Strecke exzentrisch ist.

In einer anderen Ausführungsform ist vorgesehen, dass das Schiebelagerelement entlang einer Verschieberichtung verlagerbar ist, die mit der Klemmebene einen Winkel von 90° einschließt. In der Klemmebene (oder im Wesentlichen in der Klemmebene) erfolgt die Kraftbeaufschlagung durch den Schraubbolzen, wobei in der Verschieberichtung die durch thermische Dimensionsänderung, insbesondere Längenänderung, bewirkte Verschiebung des jeweiligen Rohres relativ zu der Brennkraftmaschine erfolgt. Das Schiebelagerelement ist genau entlang dieser Verschieberichtung verlagerbar, so dass die Längen- beziehungsweise Dimensionsänderung des Rohres mitgemacht werden kann, ohne dass sich der Kraftangriff des Schraubbolzens relativ zum Rohr nachteilig verändert.

Weiter ist vorgesehen, dass der Schraubbolzen auf einer Seite des Klemmflansches liegt und dass der Flanschbereich auf einer zu dieser Seite gegenüberliegenden Seite des Klemmflansches angeordnet ist. Der Klemmflansch ist hierbei insbesondere als Endbereich des Rohres ausgebildet, wobei der Schraubbolzen an der einen Seite des Klemmflansches liegt beziehungsweise angreift, wohingegen der Flanschbereich, der in der Hinterschneidung eingesetzt angeordnet ist, auf der dieser gegenüberliegenden Seite des Klemmflansches angeordnet ist. Auf diese Weise ergibt sich eine im Wesentlichen zentrisch durch das Rohr verlaufende Kraftbeaufschlagung mit einer gleichmäßigen Kräftezerlegung und Klemmwirkung bei Kraftbeaufschlagung mit nur einem Schraubbolzen.

In einer weiteren Ausführungsform ist vorgesehen, dass das Rohr, insbesondere Krümmerrohr, elastisch nachgiebig, insbesondere zumindest im Beaufschlagungsbereich des Schraubbolzens elastisch nachgiebig, ausgebildet ist. Durch Wahl geeigneter Werkstoffe lässt sich die Elastizität, insbesondere die elastische Verformbarkeit des Rohres weitgehend frei bestimmen. Durch diese elastische Ausbildung des Rohres kann die Vorspannkraft im Beaufschlagungsbereich des Schraubbolzens weitgehend frei bestimmt werden. Hierdurch ergibt sich auch bei thermisch bedingter Dimensionsänderung des Rohres eine für eine sichere, dichte Klemmverbindung stets ausreichende Vorspannkraft. Diese wird auch nicht durch das Verschwenken des Schraubbolzens in dem Schwenklagerelement nachteilig beeinträchtigt. Zwar bewirkt ein Verschwenken um die Schwenkachse eine Längenänderung der Strecke zwischen Schwenkachse und Beaufschlagungsbereich, wobei der Schraubbolzen selbstverständlich diese Längenänderung nicht mitmacht, sondern in seiner Länge unverändert bleibt. Die sich hieraus ergebende Längendifferenz wird aber durch die Vorspannkraft, die durch die elastische Ausbildung des Rohres bewirkt wird, ohne Nachteile ausgeglichen.

In einer weiteren, bevorzugten Ausführungsform bildet der Flanschbereich zusammen mit der Hinterschneidung eine Verdrehsicherung für das Rohr, insbesondere Krümmerrohr. Der Flanschbereich und die zu diesem korrespondierende Hinterschneidung sind hierbei so ausgebildet, dass sie, beispielsweise durch die Ausbildung von Nasen oder tangential zum Rohr verlaufenden Auflagebereichen, relativ zur Brennkraftmaschine eine Verdrehung des Rohres um sein Zentrum oder einen Drehpunkt außerhalb des Zentrum nicht zulassen. Insbesondere kann der Flanschbereich als einstückig zum Rohr rohraußenumfangsseitig angeordnete, tangentiale, einseitige Auflagefläche ausgebildet sein.

Weitere vorteilhafte Ausführungsformen ergeben sich aus den Unteransprüchen und aus Kombinationen derselben.

Die Erfindung wird nachfolgend anhand von Figuren näher erläutert.

Es zeigen
- Figur 1: eine dreidimensionale Darstellung einer erfindungsgemäßen Klemmflanschanordnung;
- Figur 2: einen Längsschnitt durch eine erfindungsgemäße Klemmflanschanordnung und
- Figur 3: einen Querschnitt durch eine erfindungsgemäße Klemmflanschanordnung.

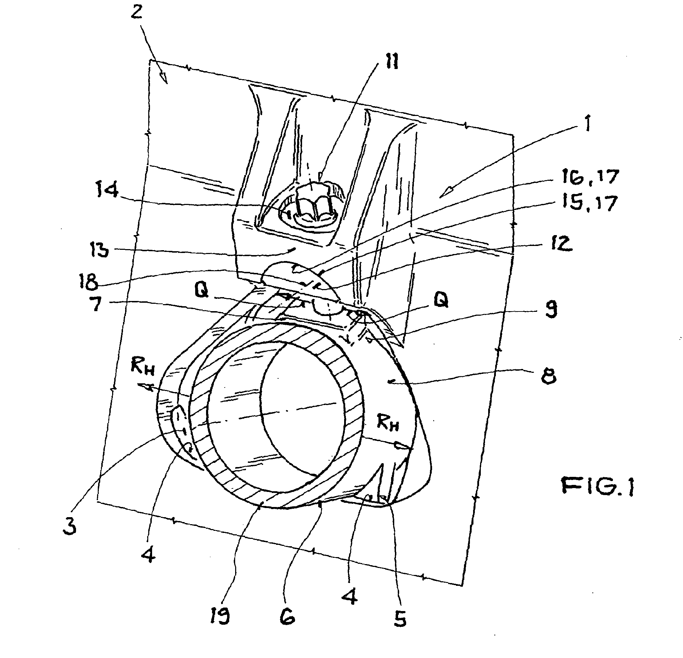

Figur 1 zeigt eine Klemmflanschanordnung 1 einer nicht dargestellten Auspuffanlage einer nur ausschnittsweise dargestellten Brennkraftmaschine 2. An der Brennkraftmaschine 2 ist in einer Übergröße aufweisenden Wandausnehmung 3 unterseitig eine Hinterschneidung 4 angeordnet, die mit einem Flanschbereich 5, der an einem Rohr 6 unterseitig ausgebildet ist, zusammenwirkt. Das Rohr 6, an dem der Flanschbereich 5 einstückig ausgebildet ist, ist mit einem, in Axialerstreckung betrachteten, der Brennkraftmaschine 2 zugewandten Endbereich 7 der Brennkraftmaschine 2 angelagert. Der Endbereich 7 bildet hierbei einen Klemmflansch 8 aus, der an seiner dem Flanschbereich 5 gegenüberliegenden Oberseite 9 einen Beaufschlagungsbereich 10 aufweist, der von einem Schraubbolzen 11 beaufschlagt wird. Der Schraubbolzen 11 ist in einem der Brennkraftmaschine 2 zugeordneten, hier nicht sichtbaren Gewinde eingeschraubt, das in einem Lagerelement 12 ausgebildet ist, das sich an einem dem Flanschbereich 5 gegenüberliegenden, an der Brennkraftmaschine 2 ausgebildeten Gegenlager 13 abstützt. Der Schraubbolzen 11 durchgreift hierzu eine in das Gegenlager 13 eingebrachte Gegenlagerausnehmung 14, die relativ zu dem Durchmesser des Schraubbolzens 11 deutliches Übermaß besitzt, um ein Radialspiel des Schraubbolzens 11 in der Gegenlagerausnehmung 14 zu erlauben. Das Lagerelement 12 ist mit seiner dem Rohr 6 abgewandten, dem Gegenlager 13 zugewandten Lagerelementeoberseite 15 als Abschnitt eines Kreiszylinders ausgebildet, dergestalt, dass die Lagerelementeoberseite 15 wie eine Mantelfläche eines Kreiszylinders gestaltet ist. Das Lagerelement 12 hat demzufolge einen halbkreisförmigen oder fast halbkreisförmigen Querschnitt. Das Gegenlager 13 weist mit seiner Gegenlagerunterseite 16 eine diesem entsprechende, formangepasste Geometrie auf. Lagerelementeoberseite 15 und Gegenlagerunterseite 16 bilden hierbei Gleitflächen 17 aus. Das Lagerelement 12 ist somit vermittels der Gleitflächen 17 um eine Schwenkachse 18 verschwenkbar. Da die Wandausnehmung 3 relativ zum Klemmflansch 8 Übergröße aufweist, kann das Rohr 6 in Horizontalrichtung R_{H} eine Horizontalbewegung in geringem Umfange ausführen, wobei das Lagerelement 12 über den Schraubbolzen 11 von einer durch diese Verschiebung bewirkten Querkraft Q beaufschlagt und hierdurch um die Schwenkachse 18 verschwenkt wird, wobei sich das Lagerelement 12 an dem Gegenlager 13 über die Lagerelementeoberseite 15 und die Gegenlagerunterseite 16, nämlich die Gleitflächen 17, gleitend abstützt. Insbesondere thermische Ausdehnung des Rohrs 6, das insbesondere als Krümmerrohr 19 ausgebildet ist, kann hierdurch bei gleichbleibend gut dichtender Anpressung durch den Schraubbolzen 11 an die Brennkraftmaschine 2 ausgeglichen werden.

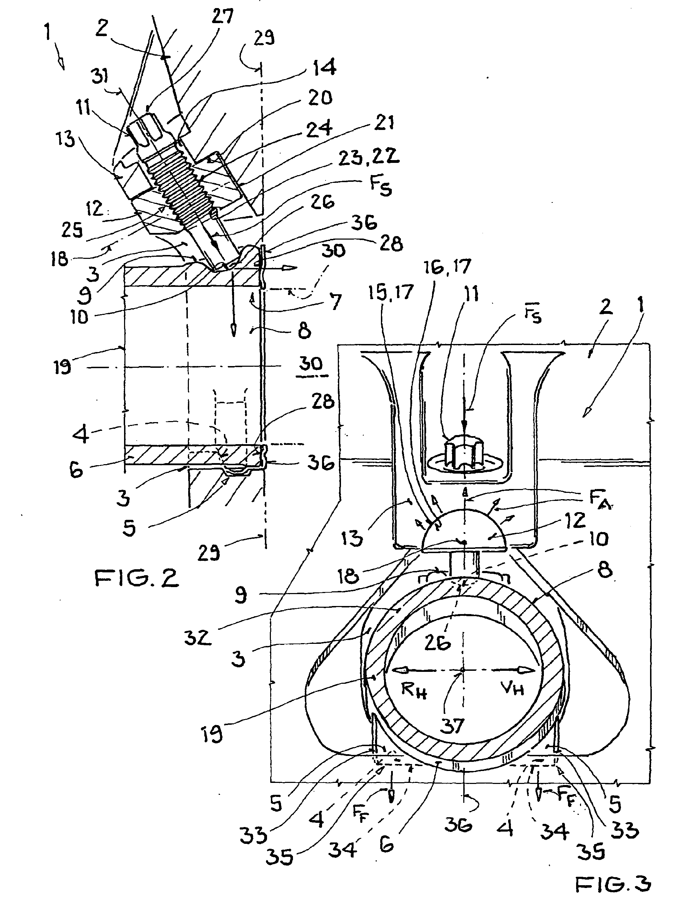

Figur 2 zeigt die Klemmflanschanordnung 1 im Querschnitt. An der Brennkraftmaschine 2 ist das Gegenlager 13 mit der den Schraubbolzen 11 umgreifenden Gegenlagerausnehmung 14 angeordnet, wobei in dem Gegenlager 13 das in Figur 1 beschriebene Lagerelement 12 um die Schwenkachse 18 verschwenkbar angeordnet ist. Hierzu ist in dem Gegenlager 13 eine Sackausnehmung 20 ausgebildet, die das Lagerelement 12, das wie zu Figur 1 beschrieben, wenigstens teilweise zylindrisch, insbesondere als Abschnitt eines Kreiszylinders ausgeführt ist, mit seiner Lagerelementrückseite umfangsseitig wenigstens abschnittsweise umgreift und somit eine definierte Anordnung in dem Gegenlager 13 ermöglicht. In dem Lagerelement 12 ist ein Gewinde 22 als Innengewinde 23 vorgesehen, dem ein Außengewinde 24 in einem bevorzugt mittleren Bereich 25 in Längserstreckung des Schraubbolzens 11 entspricht. Der Schraubbolzen 11 kann demzufolge in dem Gewinde 22 durch axiales Verdrehen längsverstellt werden, wodurch sich eine Änderung der Länge seines aus dem Lagerelement 12 unterseitig austretenden Druckendes 26 ergibt. Wird der Schraubbolzen 11 aus dem Gewinde 22 herausgeschraubt, beispielsweise mittels eines an seinem dem Druckende gegenüberliegenden Kopfende 27 ausgebildeten Werkzeugeingriffselements, so wird der Schraubbolzen 11 von dem an dem Rohr 6 ausgebildeten Klemmflansch 8 wegbewegt; wird er hingegen in das Gewinde 22 eingeschraubt, wird er auf den Klemmflansch 8 zugbewegt, bis er den Beaufschlagungsbereich 10 des Klemmflansches berührt und mit einer Kraft Fₛ beaufschlagt. Durch die Beaufschlagung mit der Kraft F_{S} wird der Klemmflansch 8 durch Vektorzerlegung der Kraft F_{S} einerseits mit seinem gegenüber dem Beaufschlagungsbereich 10 angeordneten Flanschbereich 5 in die Hinterschneidung 4 der an der Brennkraftmaschine 2 angeordneten Wandausnehmung 3, andererseits in Richtung auf das äußerste Ende des Endbereichs 7 des Rohres 6 an die Brennkraftmaschine 2 gepresst. Die Brennkraftmaschine 2 weist hierzu eine Rohrauflagefläche 28 auf, wobei Rohrauflagefläche 28 und Endbereich 7 des Rohres 6 einander in einer Dichtebene 29 in Berührlage gegenüberliegen. Die Rohrauflagefläche 28 ist für den Durchtritt von Auspuffgasen mit einem Gaswechselkanal 30 durchsetzt, der in das Rohr 6 mündet. Zwischen der Rohrauflagefläche 28 und dem Endbereich 7 des Rohres 6 kann vorteilhaft eine hier nicht dargestellte Dichtung angeordnet sein, die aufgrund ihrer Materialeigenschaften eine bessere Abdichtung zwischen Rohr 6 und Rohrauflagefläche 28 bewirkt. Die Kraft F_{S} wird entlang einer Schraubbolzenlängsachse 31 aufgebracht, die mit der Schwenkachse 18 eine Klemmebene 36 definiert, die mit der Dichtebene 29 einen Winkel von 90° einschließt. In Ruhelage (insbesondere also im kalten Zustand der Brennkraftmaschine 2 und des Rohres 6) verläuft die Klemmebene 36 durch ein Zentrum 37 des Rohres 6 im Bereich des Klemmflansches 8. Im Beaufschlagungsbereich 10 wird sie durch vektorielle Zerteilung in die Dichtpresskraft F_{D} sowie in die Flanschklemmkraft F_{F} zerlegt. Die Dichtpresskraft F_{D} presst den Endbereich 7 des Rohrs 6 an die Rohrauflagefläche 28, und zwar in der Dichtebene 29; die Flanschklemmkraft F_{F} presst das Rohr 6 mit dem Flanschbereich 5 in die Hinterschneidung 4. Hierdurch wird ein sicherer, definierter Sitz des Klemmflansches 8 und damit des Rohres 6 an der Brennkraftmaschine 2 bei optimaler Abdichtung in der Dichtebene 29 mit nur einem Schraubbolzen 27 bewirkt.

Figur 3 zeigt die vorstehend beschriebene Klemmflanschanordnung 1 im Querschnitt. Der in dem Lagerelement 12 eingeschraubte Schraubbolzen 11 bewirkt über seine Abstützung in dem Lagerelement 12, dass sich seinerseits am Gegenlager 13 abstützt, eine Beaufschlagung des Beaufschlagungsbereichs 10 des Klemmflansches 8 des Rohres 6 mit der Kraft F_{S}. Der Klemmflansch 8 ist mit dem Flanschbereich 5 in der aufgrund der Perspektive hier nicht sichtbaren Hinterschneidung 4 eingesetzt angeordnet, wobei der Klemmflansch 8 innerhalb der Wandausnehmung 3, die an der Brennkraftmaschine 2 ausgebildet ist, eine Horizontalverschiebung V_{H} in Horizontalrichtung R_{H} durchführen kann, insbesondere durch thermische Ausdehnung des als Krümmerrohr 19 ausgebildeten Rohres 6. Die Kraft F_{S} wird im Beaufschlagungsbereich 10 in den Klemmflansch 8 eingeleitet, wodurch sich dadurch, dass sich der Schraubbolzen 11 in dem Lagerelement 12, dieses sich an dem Gegenlager 13 abstützt, eine Einleitung von Abstützkraft F_{A} durch das Lagerelement 12 in das Gegenlager 13. Weiter ergibt sich eine Einleitung der Flanschklemmkraft F_{F} über die Hinterschneidung 4 in die Brennkraftmaschine 2. Durch die geringfügige Horizontalverschiebung V_{H} wird das Lagerelement 12 um die Schwenkachse 18 verschwenkt, wobei es sich nach wie vor an dem Gegenlager 13 abstützt, wie zuvor in Figur 1 und Figur 2 beschrieben. Da durch diese Verschwenkbewegung der Abstand d zwischen Lagerelement 12 und Beaufschlagungsbereich 10 geringfügig größer wird, das Druckende 26 des Schraubbolzens 11 aber längengleich, der Schraubbolzen 11 also unverändert hinsichtlich seiner Axiallage in dem Lagerelement 12 verbleibt, ergibt sich eine geringfügige Reduktion der auf den Beaufschlagungsbereich 10 einwirkenden Kraft F_{S}. Um dies zufriedenstellend auszugleichen, wird der Schraubbolzen 11 in Ruhelage des Klemmflansches 8 so weit eingeschraubt, dass die Kraft F_{S} zu einer Vorspannung des Rohres 6 über den Beaufschlagungsbereich 10 führt. Dies ist besonders vorteilhaft dadurch darstellbar, dass das Rohr 6, zumindest im Bereich des Klemmflansches 8, aus einem elastischen Werkstoff 32 besteht; über geeignete Werkstoffauswahl kann insbesondere durch Legierung von geeigneten Metallen eine solche zu guter Vorspannung führende Elastizität problemlos bewirkt werden. Der Flanschbereich 5 ist hier in Form von einstückig zum Rohr 6 ausgebildeten Nasen 33 ausgeführt, wobei die Nasen 33 mit ihrer Nasenunterseite 34 parallel zur Hinterschneidung ausgeführt sind. Hierdurch ergibt sich im Zusammenwirken von Flanschbereich 5 und Hinterschneidung 4 eine Verdrehsicherung 35 hinsichtlich des Rohres 6 in seiner Anordnung in der Wandausnehmung 3.

### BEZUGSZEICHENLISTE

- 1: Klemmflanschanordnung
- 2: Brennkraftmaschine
- 3: Wandausnehmung
- 4: Hinterschneidung
- 5: Flanschbereich
- 6: Rohr
- 7: Endbereich
- 8: Klemmflansch
- 9: Oberseite
- 10: Beaufschlagungsbereich
- 11: Schraubbolzen
- 12: Lagerelement
- 13: Gegenlager
- 14: Gegenlagerausnehmung
- 15: Lagerelementeoberseite
- 16: Gegenlagerunterseite
- 17: Gleitfläche
- 18: Schwenkachse
- 19: Krümmerrohr
- 20: Sackausnehmung
- 21: Lagerelementrückseite
- 22: Gewinde
- 23: Innengewinde
- 24: Außengewinde
- 25: mittlerer Bereich
- 26: Druckende
- 27: Kopfende
- 28: Rohrauflagefläche
- 29: Dichtebene
- 30: Gaswechselkanal
- 31: Schraubbolzenlängsachse
- 32: elastischer Werkstoff
- 33: Nase
- 34: Nasenunterseite
- 35: Verdrehsicherung
- 36: Klemmebene
- 37: Zentrum

- R_{H}: Horizontalrichtung
- Q: Querkraft
- F_{S}: Kraft
- F_{D}: Dichtpresskraft
- F_{F}: Flanschklemmkraft
- F_{A}: Abstützkraft
- V_{H}: Horizontalverschiebung
- d: Abstand

## Patentansprüche

1. Klemmflanschanordnung zum Anschluss einer Auspuffanlage an eine Brennkraftmaschine, mit mindestens einer an der Brennkraftmaschine ausgebildeten Hinterschneidung, in der ein Flanschbereich eines Klemmflansches eingesetzt angeordnet ist und mit mindestens einem Schraubbolzen, der in ein der Brennkraftmaschine zugeordnetes Gewinde eingeschraubt ist und mit einem Ende den Klemmflansch oder ein am Klemmflansch befestigtes Rohr, insbesondere Krümmerrohr, der Auspuffanlage klemmend beaufschlagt, **dadurch gekennzeichnet, dass** das Gewinde (22) in einem Lagerelement (12) ausgebildet ist, das sich an einem Gegenlager (13) der Brennkraftmaschine (2) verlagerbar abstützt.

2. Klemmflanschanordnung nach Anspruch 1, **dadurch gekennzeichnet, dass** das Lagerelement (12) ein Schwenklagerelement ist.

3. Klemmflanschanordnung nach einem der vorhergehenden Ansprüche, **dadurch gekennzeichnet, dass** das Lagerelement (12) ein Schiebelagerelement ist.

4. Klemmflanschanordnung nach einem der vorhergehenden Ansprüche, **dadurch gekennzeichnet, dass** der Klemmflansch (8) in einer Dichtebene (29) an der Brennkraftmaschine (2) anliegt.

5. Klemmflanschanordnung nach einem der vorhergehenden Ansprüche, **dadurch gekennzeichnet, dass** das Lagerelement (12) um eine Schwenkachse (18) verschwenkbar ist, die quer zu einer Schraubbolzenlängsachse (31) des Schraubbolzens (11) verläuft sowie die Schraubbolzenlängsachse (31) kreuzt und in einer Klemmebene (36) liegt, in der die Schraubenbolzenachse (31) liegt, wobei die Klemmebene (36) zu der Dichtebene (29) einen Winkel von 90° einschließt.

6. Klemmflanschanordnung nach einem der vorhergehenden Ansprüche, **dadurch gekennzeichnet, dass** die Klemmebene (36) durch oder im Wesentlichen durch ein Zentrum (37) des an die Brennkraftmaschine (2) mittels des Klemmflansches (8) angeschlossenen Rohrs (6), insbesondere Krümmerrohrs (19), der Auspuffanlage verläuft.

7. Klemmflanschanordnung nach einem der vorhergehenden Ansprüche, **dadurch gekennzeichnet, dass** das Schiebelagerelement entlang einer Verschieberichtung verlagerbar ist, die mit der Klemmebene (36) einen Winkel von 90° einschließt.

8. Klemmflanschanordnung nach einem der vorhergehenden Ansprüche, **dadurch gekennzeichnet, dass** der Schraubbolzen (11) auf einer Seite des Klemmflansches (8) liegt und dass der Flanschbereich (5) auf einer zu dieser Seite gegenüberliegenden Seite des Klemmflansches (8) angeordnet ist.

9. Klemmflanschanordnung nach einem der vorhergehenden Ansprüche, **dadurch gekennzeichnet, dass** das Rohr (6), insbesondere Krümmerrohr (19), elastisch nachgiebig, insbesondere zumindest im Beaufschlagungsbereich (10) des Schraubbolzens (11) elastisch nachgiebig, ausgebildet ist.

10. Klemmflanschanordnung nach einem der vorhergehenden Ansprüche, **dadurch gekennzeichnet, dass** der Flanschbereich (5) zusammen mit der Hinterschneidung (4) eine Verdrehsicherung (35) für das Rohr (6), insbesondere Krümmerrohr (19), bildet.

## Claims

1. Clamping flange arrangement for connecting an exhaust system to an internal combustion engine, with at least one undercut which is formed on the internal combustion engine and in which a flange region of a clamping flange is arranged, inserted, and with at least one screw bolt which is screwed into a thread assigned to the internal combustion engine and exerts a clamping action with one end upon the clamping flange or upon a pipe, in particular manifold pipe, fastened to the clamping flange, of the exhaust system, **characterized in that** the thread (22) is formed in a bearing element (12) which is supported displaceably on a counterbearing (13) of the internal combustion engine (2).

2. Clamping flange arrangement according to Claim 1, **characterized in that** the bearing element (12) is a pivot-bearing element.

3. Clamping flange arrangement according to one of the preceding claims, **characterized in that** the bearing element (12) is a sliding-bearing element.

4. Clamping flange arrangement according to one of the preceding claims, **characterized in that** the clamping flange (8) bears against the internal combustion engine (2) along a sealing plane (29).

5. Clamping flange arrangement according to one of the preceding claims, **characterized in that** the bearing element (12) is pivotable about a pivot axis (18) which runs transversely with respect to a screw-bolt longitudinal axis (31) of the screw bolt (11) and which intersects the screw-bolt longitudinal axis (31) and lies in a clamping plane (36) in which the screw-bolt axis (31) lies, the clamping plane (36) forming an angle of 90° with the sealing plane (29).

6. Clamping flange arrangement according to one of the preceding claims, **characterized in that** the clamping plane (36) runs through or essentially through a centre (37) of the pipe (6), in particular manifold pipe (19), connected to the internal combustion engine (2) by means of the clamping flange (8), of the exhaust system.

7. Clamping flange arrangement according to one of the preceding claims, **characterized in that** the sliding-bearing element is displaceable in a displacement direction which forms an angle of 90° with the clamping plane (36).

8. Clamping flange arrangement according to one of the preceding claims, **characterized in that** the screw bolt (11) lies on one side of the clamping flange (8), and **in that** the flange region (5) is arranged on side of the clamping flange (8) which lies opposite this side.

9. Clamping flange arrangement according to one of the preceding claims, **characterized in that** the pipe (6), in particular manifold pipe (19), is designed to be elastically flexible, in particular to be elastically flexible at least in the region of action (10) of the screw bolt (11).

10. Clamping flange arrangement according to one of the preceding claims, **characterized in that** the flange region (5) forms, together with the undercut (4), an anti-twist device (35) for the pipe (6), in particular the manifold pipe (19).

## Revendications

1. Agencement de bride de serrage pour le raccordement d'un système d'échappement à un moteur à combustion interne, comprenant au moins une contre-dépouille réalisée sur le moteur à combustion interne, dans laquelle une région de bride d'une bride de serrage est insérée, et comprenant au moins un boulon fileté, qui est vissé dans un filetage associé au moteur à combustion interne, et sollicite par serrage, par une extrémité, la bride de serrage ou un tuyau fixé sur la bride de serrage, en particulier un tuyau de collecteur, du système d'échappement, **caractérisé en ce que** le filetage (22) est réalisé dans un élément de palier (12) qui s'appuie de manière déplaçable sur un contre-palier (13) du moteur à combustion interne (2).

2. Agencement de bride de serrage selon la revendication 1, **caractérisé en ce que** l'élément de palier (12) est un élément de palier pivotant.

3. Agencement de bride de serrage selon l'une quelconque des revendications précédentes, **caractérisé en ce que** l'élément de palier (12) est un élément de palier coulissant.

4. Agencement de bride de serrage selon l'une quelconque des revendications précédentes, **caractérisé en ce que** la bride de serrage (8) s'applique dans un plan d'étanchéité (29) contre le moteur à combustion interne (2).

5. Agencement de bride de serrage selon l'une quelconque des revendications précédentes, **caractérisé en ce que** l'élément de palier (12) peut pivoter autour d'un axe de pivotement (18), qui s'étend transversalement à un axe longitudinal (31) du boulon fileté (11) et qui croise l'axe longitudinal du boulon fileté (31) et qui se situe dans un plan de serrage (36), dans lequel se situe l'axe du boulon fileté (31), le plan de serrage (36) formant avec le plan d'étanchéité (29) un angle de 90°.

6. Agencement de bride de serrage selon l'une quelconque des revendications précédentes, **caractérisé en ce que** le plan de serrage (36) s'étend à travers ou essentiellement à travers un centre (37) du tuyau (6) raccordé au moteur à combustion interne (2) au moyen de la bride de serrage (8), notamment du tuyau de collecteur (19) du système d'échappement.

7. Agencement de bride de serrage selon l'une quelconque des revendications précédentes, **caractérisé en ce que** l'élément de palier coulissant peut être déplacé le long d'une direction de coulissement qui forme avec le plan de serrage (36) un angle de 90°.

8. Agencement de bride de serrage selon l'une quelconque des revendications précédentes, **caractérisé en ce que** le boulon fileté (11) se situe d'un côté de la bride de serrage (8) et **en ce que** la région de bride (5) est disposée sur un côté de la bride de serrage (8) opposé à ce côté.

9. Agencement de bride de serrage selon l'une quelconque des revendications précédentes, **caractérisé en ce que** le tuyau (6), notamment le tuyau collecteur (19), est réalisé sous forme élastiquement flexible, notamment sous forme élastiquement flexible au moins dans la région de sollicitation (10) du boulon fileté (11).

10. Agencement de bride de serrage selon l'une quelconque des revendications précédentes, **caractérisé en ce que** la région de bride (5) forme conjointement avec la contre-dépouille (4) une fixation anti-rotation (35) pour le tuyau (6), notamment le tuyau collecteur (19).
